(19) Europäisches Patentamt
European Patent Office
Office européen des brevets

(11) EP 3 570 191 A1

(12) EUROPÄISCHE PATENTANMELDUNG

(43) Veröffentlichungstag:
20.11.2019 Patentblatt 2019/47

(51) Int Cl.:
*G06F 17/50* (2006.01)

(21) Anmeldenummer: 18173314.8

(22) Anmeldetag: 18.05.2018

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: DAW SE
64372 Ober-Ramstadt (DE)

(72) Erfinder:
• WEBER, Enno
64372 Ober-Ramstadt (DE)
• VOELCKER, Axel
64319 Pfungstadt (DE)
• BISHARA, Dr. Ayman
64372 Ober-Ramstadt (DE)

(74) Vertreter: Metten, Karl-Heinz
Boehmert & Boehmert
Anwaltspartnerschaft mbB
Pettenkoferstrasse 22
80336 München (DE)

(54) **VERFAHREN ZUR BESTIMMUNG EINES GRENZWERTPARAMETERS, INSBESONDERE ZUR VERMINDERUNG DER GEFAHR EINER FASSADENBESCHÄDIGUNG UND/ODER ÜBERHITZUNG**

(57) Die vorliegende Erfindung betrifft ein Verfahren zur Bestimmung eines Grenzwertparameters, insbesondere zur Verminderung der Gefahr einer Fassadenbeschädigung und/oder zur Verminderung der Gefahr einer Überhitzung der Fassade bzw. Fassadenbeschichtung. Die Erfindung betrifft ferner ein Computerprogrammprodukt und dessen Verwendung.

Figur 3

**Beschreibung**

Die vorliegende Erfindung betrifft ein Verfahren zur Bestimmung eines Grenzwertparameters, insbesondere zur Verminderung der Gefahr einer Fassadenbeschädigung und/oder zur Verminderung der Gefahr einer Überhitzung der Fassade bzw. Fassadenbeschichtung. Die Erfindung betrifft ferner ein Computerprogrammprodukt sowie dessen Verwendung.

Fassadenbeschichtungen sind aus dem Stand der Technik hinreichend bekannt. Auch ist es bekannt, dass Witterungsverhältnisse Fassaden beschädigen können. Insbesondere bei hohen Temperaturen kann die Fassadenbeschichtung zu heiß werden, so dass sich die Fassadenzusammensetzung strukturell verändert oder gar zerstört wird. Auch kann es in Innenräumen zu warm werden, wenn die Fassade bzw. Fassadenbeschichtung zu heiß ist.

Bisher wurde meist auf Erfahrungswerte des Malers oder Anstreichers zurückgegriffen. In südlichen Ländern werden von diesen beispielsweise gerne sehr helle und oftmals auch weiße Farbzusammensetzungen verwendet, welche einen großen Teil des Lichts reflektieren. In nördlichen Ländern können auch dunklere Farben zum Einsatz kommen. Die Prognose, ob eine spezifische Farbzusammensetzung für einen bestimmten Ort tatsächlich geeignet ist, gestaltet sich schwierig. Zahlreiche Faktoren, beispielsweise die Ausrichtung der Wände, die Abschattung durch Vegetation oder Regen können diese beeinflussen, so dass der Fachmann vor der scheinbar unlösbaren Aufgabe steht, diese alle angemessen zu berücksichtigen, wenn er die Eignung einer Fassadenbeschichtung für eine Beschichtungslokalität bewerten möchte, ohne die Fassadenbeschichtung testweise aufzubringen und zeitraubende Experimente durchzuführen.

Eine Aufgabe der vorliegenden Erfindung ist es, die Nachteile des Stands der Technik zu überwinden und ein besonders einfaches und zuverlässiges Verfahren zur Bestimmung eines Grenzwertparameters und zur Bewertung der Eignung einer Fassadenbeschichtung für eine Beschichtungslokalität bereitzustellen. Auch ist es eine Aufgabe, ein Computerprogrammprodukt für die Implementierung eines Bewertungsverfahrens oder von Teilen hiervon bereitzustellen. Eine Aufgabe ist es vorzugsweise, einem Maler ein Hilfsmittel für die Auswahl geeigneter Farbbeschichtungen bereitzustellen.

Gelöst wird die Aufgabe durch ein Verfahren zur Bestimmung eines Grenzwertparameters, insbesondere zur Verminderung der Gefahr einer Fassadenbeschädigung und/oder zur Verminderung der Gefahr einer Überhitzung, insbesondere der Fassade, und/oder zur Bestimmung einer Maximaltemperatur von Fassaden, vorzugsweise zur Beschichtung einer Fassade mit verminderter Gefahr der Fassadenbeschädigung, umfassend die folgenden Schritte

a) Auswahl einer potentiellen Fassadenbeschichtung mit einem ersten Absorptionskoeffizienten $\alpha_{s1}$ und/oder mit einer ersten Maximaltemperatur $T_{max1}$,

b) Auswahl einer potentiellen Beschichtungslokalität mit einer ersten Lufttemperatur $T_{L1}$ und mit einem ersten Wärmeübertragungskoeffizienten $h_{w1}$ sowie vorzugsweise mit einer Sonnenintensität $I_s$,

c) Bestimmung

c.i) eines zweiten Absorptionskoeffizienten $\alpha_{s2}$ mit $T_{max1}$, $T_{L1}$, $h_{w1}$ insbesondere wobei $\beta \times \alpha_{s2} = \mu \times (h_{w1} \times (T_{max1} - T_{L1}) + 5{,}415 \times 10^{-8}(T_{max1}^4 - 0{,}9T_{L1}^4))$ gilt, oder

c.ii) einer zweiten Maximaltemperatur $T_{max2}$ mit $\alpha_{s1}$, $T_{L1}$, $h_{w1}$ insbesondere

bei $\beta \times \alpha_{s1} = \mu \times (h_{w1} \times (T_{max2} - T_{L1}) + 5{,}415 \times 10^{-8}(T_{max2}^4 - 0{,}9T_{L1}^4))$ gilt, oder

c.iii) einer zweiten Lufttemperatur $T_{L2}$ mit $T_{max1}$, $\alpha_{s1}$, $h_{w1}$, insbesondere

wobei $\beta \times \alpha_{s1} = \mu \times (h_{w1} \times (T_{max1} - T_{L2}) + 5{,}415 \times 10^{-8}(T_{max1}^4 - 0{,}9T_{L2}^4))$ gilt, oder

c.iv) eines zweiten Wärmeübertragungskoeffizienten $h_{w2}$ mit $T_{max1}$, $\alpha_{s1}$, $T_{L1}$, insbesondere

wobei $\beta \times \alpha_{s1} = \mu \times (h_{w2} \times (T_{max1} - T_{L1}) + 5{,}415 \times 10^{-8}(T_{max1}^4 - 0{,}9T_{L1}^4))$ gilt,

vorzugsweise wobei für jeden der Schritte c.i) bis c.iv) $\mu$ = 0,8 bis 1,2 und $\beta$ = 700 bis 1100 Wm$^{-2}$ gilt oder $\mu$ = 0,8 bis 1,2 gilt und der Wert $\beta$, so ausgewählt wird, dass er einer Sonnenintensität $I_s$ der potentiellen Beschichtungslo-

kalität am nächsten kommt, vorzugsweise der Sonnenintensität $I_s$ entspricht,

d) vorzugsweise Ausgabe eines in Schritt c) erhaltenen Wertes auf einem Display,

e) vorzugsweise Spezifizierung der potentiellen Fassadenbeschichtung als geeignet für die Beschichtungslokalität, wenn eine der nachstehenden Voraussetzungen erfüllt ist:

$$\alpha_{s1} < \alpha_{s2} \text{ oder } T_{max1} > T_{max2} \text{ oder } T_{L1} < T_{L2} \text{ oder } h_{w1} < h_{w2},$$

f) vorzugsweise Beschichtung einer Fassade an der Beschichtungslokalität mit einer gemäß Schritt e) als geeignet spezifizierten Fassadenbeschichtung.

Es wurde mit der vorliegenden Erfindung erkannt, dass die erste Maximaltemperatur $T_{max1}$, der erste Absorptionskoeffizient $\alpha_{s1}$, der erste Wärmeübertragungskoeffizient $h_{w1}$ und/oder die erste Lufttemperatur $T_{L1}$ geeignet und hinreichend sind, um die Eignung einer Fassadenbeschichtung zumindest näherungsweise zu evaluieren. Insbesondere wurde erkannt, dass sich eine zweite Maximaltemperatur $T_{max2}$, ein zweiter Absorptionskoeffizient $\alpha_{s2}$, ein zweiter Wärmeübertragungskoeffizient $h_{w2}$ oder eine zweite Lufttemperatur $T_{L2}$ mit besagten ersten Werten $T_{max1}$, $\alpha_{s1}$, $h_{w1}$ und/oder $TL_1$ berechnen lässt, wobei einer der besagten zweiten Werte $T_{max2}$, $\alpha_{s2}$, $h_{w2}$ und/oder $T_{L2}$ genutzt werden kann, um die Eignung der Beschichtungen zu bewerten, insbesondere wenn er mit dem korrespondierenden ersten Wert verglichen wird. Beispielsweise lässt sich eine zweite Maximaltemperatur $T_{max2}$ näherungsweise mit $\alpha_{s1}$, $T_{L1}$, $h_{w1}$ für eine Fassadenbeschichtung bestimmen, wobei diese zweite Maximaltemperatur $T_{max2}$ anschließend mit der ersten Maximaltemperatur $T_{max1}$ verglichen werden kann. Mithin muss der Fachmann nun nicht die Fassade tatsächlich vor Ort beschichten, um zu prüfen, ob diese langzeitstabil ist bzw. welche Maximaltemperatur sich einstellt. Vielmehr kann er vorab mit dem genannten Verfahren bestimmen, welche Maximaltemperatur sich an der Fassade einstellt und ob eine Eignung der Fassadenbeschichtung unter diesen Bedingungen gegeben ist. Überraschenderweise spielen viele der möglichen Einflussfaktoren regelmäßig eine untergeordnete Rolle, beispielsweise die Vegetation. Von dem Erfinder wurde erkannt, dass bereits mit den vorstehend bezeichneten Einflussfaktoren eine Auswahl geeigneter Fassadenbeschichtungen bzw. die Bestimmung einer maximal zu erwartenden Fassadentemperatur möglich ist. Hierbei werden ein zweiter Absorptionskoeffizient $\alpha_{s2}$, eine zweite Lufttemperatur $T_{L2}$, eine zweite Maximaltemperatur $T_{max2}$ oder ein zweiter Wärmeübertragungskoeffizient $h_{w2}$ mit den korrespondierenden drei anderen ersten Werten bestimmt. Diese in Schritt c) bestimmten Werte stellen Grenzwerte dar, welche in Schritt e) mit tatsächlichen Werten verglichen werden. Je nachdem ob die Grenzwerte unterschritten bzw. überschritten werden (siehe oben), wird eine Eignung einer Fassadenbeschichtung zu bejahen oder zu verneinen sein. Falls eine solche Eignung bejaht wird, kann der Fachmann die Beschichtung an der Beschichtungslokalität einer Fassade anbringen, ohne eine Beschädigung befürchten zu müssen oder zumindest eine sehr viel geringere Wahrscheinlichkeit einer Beschädigung annehmen können (das Verfahren kann beispielsweise mechanische Beschädigungen nicht ausschließen).

Eine Fassadenbeschichtung im Sinne der vorliegenden Erfindung ist eine Beschichtung einer Fassade, vorzugsweise für die Außenoberfläche, welche insbesondere bevorzugt den Witterungsbedingungen ausgesetzt ist. Hierbei kann es sich um eine Außenfarbe handeln. Weiße Außenfarben haben beispielsweise einen niedrigen Absorptionskoeffizienten. Vorzugsweise kann die Fassadenbeschichtung auch eine IR-reflektierende oder IRabsorbierende Farbzusammensetzung sein.

Die Temperaturen der vorliegenden Erfindung sind in Kelvin (K) anzugeben. Entsprechend sind die Temperaturwerte $T_{max1}$, $T_{max2}$, $T_{L1}$, $T_{L2}$, $T_j$, $T_i$ in den mathematischen Beziehungen der vorliegenden Erfindung ebenfalls in Kelvin anzugeben. Grundsätzlich ist es erfindungsgemäß möglich, dass in der Eingabemaske einer Software, insbesondere der erfindungsgemäßen Computersoftware, Temperaturwerte in °C angegeben werden, um das vorliegende Verfahren anschließend durchzuführen. In diesem Fall lassen sich die Temperaturen automatisch von °C in K umrechnen, indem die Einheit °C in K ausgetauscht wird und 273,15 zu dem Temperaturwert addiert wird.

Der Grenzwertparameter ist der zweite Absorptionskoeffizient $\alpha_{s2}$, die zweite Lufttemperatur $T_{L2}$, der zweite Wärmeübertragungskoeffizient $h_{w2}$ und/oder die zweite Maximaltemperatur $T_{max2}$. Insbesondere bevorzugt ist der Grenzwertparameter die zweite Maximaltemperatur $T_{max2}$. Grenzwertparameter sind Extremwerte, die zu berücksichtigen sind, wenn eine Fassadenbeschichtung ausgewählt wird. Beispielsweise kann mittels der berechneten zweiten Maximaltemperatur $T_{max2}$ entschieden werden, ob die Fassadenbeschichtung für eine solche Maximaltemperatur geeignet ist. Wenn die Fassadenbeschichtung nur bis zu einer ersten Maximaltemperatur $T_{max1}$ geeignet ist, sollte der Wert $T_{max2}$ kleiner als $T_{max1}$ sein. Andernfalls wäre es ratsam, eine andere Fassadenbeschichtung auszuwählen, um eine Zerstörung der Fassadenbeschichtung zu vermeiden bzw. die Gefahr einer Zerstörung der Fassadenbeschichtung zu verringern.

Die erste Maximaltemperatur $T_{max1}$ ist vorzugsweise jene Temperatur in Kelvin, für welche die Fassadenbeschichtung des Verfahrens bestimmungsgemäß maximal geeignet ist bzw. welche maximal an der Fassadenbeschichtung gewünscht ist. Hierbei kann der Anwender des Verfahrens entscheiden, welche Temperatur er seiner Fassadenbeschichtung maximal zumuten möchte. Üblicherweise geben auch die Hersteller geeignete erste Maximaltemperaturen $T_{max1}$ vor, d.h. Temperaturen, welche laut Herstellerangaben nicht überschritten werden sollten. Auch kann eine erste Maximaltemperatur $T_{max1}$ bestimmt werden, die nicht überschritten werden soll, um eine Überhitzung von Innenräumen zu vermeiden. Maßgeblich ist letztendlich, dass das vorliegende Verfahren es ermöglicht, ein Unterschreiten der besagten ersten Maximaltemperatur $T_{max1}$ sicherzustellen.

Vorzugsweise ist die erste Maximaltemperatur in einer Ausgestaltung eine Temperatur, welcher die Fassadenbeschichtung für mindestens 24 h, 10 Tage, insbesondere 6 Monate, ausgesetzt werden kann, ohne dass die Fassadenbeschichtung zerstört und/oder strukturell verändert wird. In einer weiteren Ausgestaltung des Verfahrens nimmt die erste Maximaltemperatur $T_{max1}$ einen Wert von 40 bis 100°C, insbesondere von 60 bis 90°C, insbesondere bevorzugt von 65 bis 85°C, an bzw. wird aus diesem Bereich ausgewählt. Erste Maximaltemperaturen $T_{max1}$ in diesen Bereichen sind üblich, insbesondere auch für Fassaden mit EPS-Dämmplatten, und es hat sich gezeigt, dass die Fassadenbeschichtungen bei besagten Temperaturen meist stabil sind und eine strukturelle Veränderung über die vorstehend genannten Zeiträume nicht eintritt. Obgleich es in einer Ausgestaltung vorzuziehen ist, wenn die vom Hersteller angegebene erste Maximaltemperatur $T_{max1}$ verwendet wird, ist es somit gemäß einer alternativen Ausgestaltung des Verfahrens möglich, eine erste Maximaltemperatur $T_{maxt1}$ aus den obigen Bereichen auszuwählen. Je geringer dabei die ausgewählte erste Maximaltemperatur $T_{max1}$ ist, desto geringer die Wahrscheinlichkeit einer Fassadenbeschädigung. Wir beispielsweise eine erste Maximaltemperatur $T_{max1}$ von 40°C ausgewählt, ist eine Beschädigung von Fassaden praktisch ausgeschlossen selbst falls ungewöhnlich empfindliche Farben, beispielsweise mit organischen Zusätzen, ausgewählt werden. Das erfindungsgemäße Verfahren spezifiziert dann beispielsweise nur Fassadenbeschichtungen mit einer noch niedrigeren zweiten Maximaltemperatur $T_{max2}$ als geeignet.

Die zweite Maximaltemperatur $T_{max2}$ ist eine durch das erfindungsgemäße Verfahren bestimmbare maximale Temperatur in Kelvin, welche maximal angesichts der anderen Parameter $\alpha_{s1}$, $T_{L1}$, $h_{w1}$ für die Fassade zu erwarten ist, vorzugsweise angesichts der Parameter $\alpha_{s1}$, $T_{L1}$, $h_{w1}$, $I_s$. Es handelt sich mithin um einen idealisierten Extremwert einer Temperatur, der gemäß dem vorliegenden Verfahren berücksichtigt werden soll und bei Fassaden bei vorgegeben Werten von $\alpha_{s1}$, $T_{L1}$, $h_{w1}$ auftreten kann. Dementsprechend ist es bevorzugt, wenn die Fassadenbeschichtung so ausgewählt wird, dass die so bestimmte zweite Maximaltemperatur $T_{max2}$ kleiner als die gewünschte maximale erste Temperatur $T_{max1}$ ist, d.h. der Wert $T_{max1}$ sollte hinreichend hoch sein.

Der erste Absorptionskoeffizient $\alpha_{s1}$ ist ein Maß für den von der Oberfläche absorbierten elektromagnetischen Strahlungsanteil des eingestrahlten Lichts, insbesondere des Sonnenlichts an der Beschichtungslokalität. In einer Ausgestaltung handelt es sich um die Verringerung der Intensität elektromagnetischer Strahlung, insbesondere des Sonnenlichts an der Beschichtungslokalität, bei Bestrahlung der Fassadenbeschichtung unter einem Einstrahlwinkel von 45° oder 90° oder bei Bestrahlung der mit der Fassadenbeschichtung zu beschichtenden Fläche mit Sonnenlicht um 12:00 lokaler Zeit. Nicht absorbiertes Licht wird üblicherweise reflektiert oder gestreut. Gemessen wird vorzugsweise der Absorptionskoeffizient für das gesamte Spektrum des Sonnenlichts oder für einen Bereich von 250 bis 2500 nm. Der erste Absorptionskoeffizient $\alpha_{s1}$ wird vorzugsweise zu einem Zeitpunkt maximaler Sonnenintensität bestimmt und/oder bei wolkenlosem Himmel, insbesondere um 12:00 lokaler Zeit. In einer Ausgestaltung wir der Absorptionskoeffizient $\alpha_{s1}$ nach bzw. unter den Bedingungen der ASTM-G173 bestimmt. Vorzugsweise wird der erste Absorptionskoeffizient über mindestens ein Jahr hinweg täglich bestimmt und dann der maximale erste Absorptionskoeffizient $\alpha_{s1}$ ausgewählt.

Der zweite Absorptionskoeffizient $\alpha_{s2}$ ist ein durch das Verfahren bestimmbarer Absorptionskoeffizient, welcher maximal angesichts der anderen Parameter $T_{max1}$, $T_{L1}$, $h_{w1}$ für die Fassadenbeschichtung geeignet ist, vorzugsweise angesichts der Parameter $T_{max1}$, $T_{L1}$, $h_{w1}$, $I_s$. Wenn ein ungeeigneter Absorptionskoeffizient $\alpha_{s1}$, > $\alpha_{s2}$ ausgewählt wird, besteht - ebenso wie vorstehend für eine zu hohe ersten Maximaltemperatur $T_{max1}$ erläutert - die Gefahr einer Fassadenbeschädigung oder Überhitzung von Fassaden und/oder Innenräumen.

Der erste Wärmeübertragungskoeffizient $h_{w1}$ ist ein Proportionalitätsfaktor, der die Intensität des Wärmeübergangs an einer Grenzfläche bestimmt und wird in W/(m$^2$*K) angegeben. Es kann sich um einen minimalen Wärmeübertragungskoeffizient handeln, welcher an der Beschichtungslokalität auftritt. Alternativ kann es auch ein Mittelwert des Wärmeübertragungskoeffizienten sein, welcher für einen bestimmten Tag eines Monats oder für einen bestimmte Monat eines Jahres oder für ein ganzes Jahr bestimmt wurde oder üblicherweise für besagten Tag, besagten Monat oder besagtes Jahr angesichts der Klimazone und/oder Beschichtungslokalität zu erwarten ist. Der Wärmeübertragungskoeffizient wird dabei vorzugsweise maßgeblich von der Windgeschwindigkeit mit bestimmt.

Der zweite Wärmeübertragungskoeffizient $h_{w2}$ ist ein angesichts der anderen Parameter $\alpha_{s1}$, $T_{max1}$, $T_{L1}$, vorzugsweise angesichts der Parameter $\alpha_{s1}$, $T_{max1}$, $T_{L1}$, $I_s$, durch das Verfahren bestimmbarer Wärmeübertragungskoeffizient, welcher nicht oder nur temporär überschritten werden sollte, um die Gefahr einer Fassadenbeschädigung und/oder Überhitzung zu vermindern und wird in W/(m$^2$*K) angegeben.

Die erste Lufttemperatur $T_{L1}$ ist vorzugsweise jene Temperatur in Kelvin, welche an der Beschichtungslokalität oder in der Umgebung der Beschichtungslokalität vorliegt oder dort vorkommen kann, vorzugsweise mit einem Abstand von weniger als 100 m, insbesondere bevorzugt weniger als 10 m Abstand, von der Beschichtungslokalität. Sie wird vorzugsweise 2 Meter über dem Erdboden im Schatten bestimmt, beispielsweise in einem strahlungsgeschützten nach unten geöffneten Gehäuse. Vorzugsweise kann eine Thermometerhütte in Form einer Stevenson-Hütte zur Bestimmung der Lufttemperatur verwendet werden. Es hat sich beispielsweise eine Lamellenschutzhütte LAM 630 der Firma Eigenbrodt als geeignet erwiesen. Es kann sich um eine maximale Lufttemperatur handeln, welche an der Beschichtungslokalität auftritt. Alternativ kann es auch ein Mittelwert sein, welcher für einen bestimmten Tag eines Monats oder eins Monat einer Jahreszeit oder eines Jahr bestimmt wurde oder üblicherweise für besagten Tag, besagten Monat oder besagtes Jahr angesichts der Klimazone zu erwarten ist. Auch kann es die Lufttemperatur zum Zeitpunkt der Durchführung des Verfahrens sein. Vorzugsweise ist es die maximale Lufttemperatur, welche an der Beschichtungslokalität auftritt, insbesondere innerhalb der letzten 50 Jahre oder der letzten 10 Jahre vor Anbringung der Beschichtung an der Beschichtungslokalität. Dies kann alternativ in guter Näherung aus Klimatabellen der Region der Beschichtungslokalität ermittelt werden, welche die Maximaltemperaturen für verschiedene Monate umfassen, so dass eine Messung nicht zwingend erforderlich ist.

Die zweite Lufttemperatur $T_{L2}$ ist jene Temperatur in Kelvin, welche durch das Verfahren bestimmbar ist und von der erste Lufttemperatur vorzugsweise nicht oder nur temporär überschritten wird, um die Gefahr einer Fassadenbeschädigung und/oder Überhitzung zu vermindern.

Die Sonnenintensität $I_s$ wird in W/m² angegeben und ist insbesondere nach ISO 9060:1990 bestimmbar. Es ist vorzugsweise die Intensität des Sonnenlichts, welches auf der Erdoberfläche an der Beschichtungslokalität eintrifft, insbesondere bevorzugt nach ISO 9060:1990 und/oder über das gesamte elektromagnetische Spektrum des Sonnenlichts oder zumindest des Spektrums von 250 nm bis 2500 nm, insbesondere 250 bis 1000 nm, gemessen.

Eine Beschichtungslokalität im Sinne der vorliegenden Erfindung ist ein Standort, an welchem die Beschichtung aufgetragen werden soll. Es kann sich beispielsweise um eine Stadt oder eine Zustelladresse handeln. Auch die Angabe von Ortskoordinaten, beispielsweise GPS-Koordinaten oder Längen- und Breitengrad ist denkbar, um eine Beschichtungslokalität zu definieren.

Nachfolgend wird darauf eingegangen, wie der zweite Absorptionskoeffizient $\alpha_{s2}$, der zweite Wärmeübertragungskoeffizient $h_{w2}$, die zweite Lufttemperatur $T_{L2}$ oder die zweite Maximaltemperatur $T_{max2}$ am besten bestimmbar sind. Es sei darauf hingewiesen, dass es in dem Verfahren in Schritt c) vorzugsweise vorgesehen ist, dass nur einer der besagten zweiten Werte bestimmt werden soll. Die grundlegende Gleichung nach welcher die Werte einer Beschichtungszusammensetzung näherungsweise in Beziehung stehen, lautet dabei stets wie folgt:

$$\beta \times \alpha_s = \mu \times (h_w \times (T_{max} - T_L) + 5{,}415 \times 10^{-8}(T_{max}^4 - 0{,}9T_L^4)),$$

Diese mathematische Beziehung hat sich überraschenderweise als sehr zuverlässige Näherung erwiesen. Nachstehend erfolgt eine Anwendung bzw. Anpassung der Beziehung zu Berechnung verschiedener Werte.

Der zweite Absorptionskoeffizient $\alpha_{s2}$ ist vorzugsweise in Schritt c.i) so gewählt, dass die folgende mathematische Beziehung erfüllt ist:

$$\beta \times \alpha_{s2} = \mu \times (h_{w1} \times (T_{max1} - T_{L1}) + 5{,}415 \times 10^{-8}(T_{max1}^4 - 0{,}9T_{L1}^4)),$$

wobei $\beta$ = 700 bis 1100 Wm⁻² und $\mu$ = 0,8 bis 1,2 gilt. Der Wert für $\alpha_{s2}$ kann vorzugsweise durch folgende mathematisch äquivalente Gleichung bestimmt werden:

$$\alpha_{s2} = \frac{\mu}{\beta} \times (h_{w1} \times (T_{max1} - T_{L1}) + 5{,}415 \times 10^{-8}(T_{max1}^4 - 0{,}9T_{L1}^4)).$$

Der zweite Wärmeübertragungskoeffizient $h_{w2}$ ist vorzugsweise in Schritt c.iv) so gewählt, dass die folgende mathematische Beziehung erfüllt ist:

$$\beta \times \alpha_{s1} = \mu \times (h_{w2} \times (T_{max1} - T_{L1}) + 5{,}415 \times 10^{-8}(T_{max1}^4 - 0{,}9T_{L1}^4)),$$

wobei $\mu$ = 0,8 bis 1,2 gilt und $\beta$ = 700 bis 1100 Wm⁻² gilt und/oder der Wert $\beta$, so ausgewählt wird, dass er einer

Sonnenintensität $I_s$ der potentiellen Beschichtungslokalität am nächsten kommt, vorzugsweise der Sonnenintensität $I_s$ entspricht. Ein geeigneter Wert für $h_{w2}$ kann vorzugsweise wie folgt bestimmt werden:

$$h_{W2} = (T_{max1} - T_{L1})^{-1} \times \left( \frac{\beta \times \alpha_{s1}}{\mu} - 5{,}415 \times 10^{-8}(T_{max1}^4 - 0{,}9T_{L1}^4) \right).$$

Der Wert für $T_{L2}$ ist vorzugsweise in Schritt c.iii) so gewählt, dass die folgende mathematische Beziehung erfüllt ist:

$$\beta \times \alpha_{S1} = \mu \times (h_{w1} \times (T_{max1} - T_{L2}) + 5{,}415 \times 10^{-8}(T_{max1}^4 - 0{,}9T_{L2}^4),$$

wobei $\mu$ = 0,8 bis 1,2 gilt und $\beta$ = 700 bis 1100 Wm$^{-2}$ gilt und/oder der Wert $\beta$, so ausgewählt wird, dass er einer Sonnenintensität $I_s$ der potentiellen Beschichtungslokalität am nächsten kommt, vorzugsweise der Sonnenintensität $I_s$ entspricht. Ein geeigneter Wert für $T_{L2}$ kann vorzugsweise durch ein Iterationsverfahren umfassend die folgenden Schritte bestimmt werden:

c.1') Vorgabe eine Vielzahl von möglichen Temperaturwerten $T_j$ für die zweite Lufttemperatur $T_{L2}$,

c.2') Bestimmung von A = $\beta \times \alpha_{s1}$ und von B$_j$ = $\mu \times (h_{W1} \times (T_{max1} - T_j) + 5{,}415 \times 10^{-8}(T_{max1}^4 - 0{,}9T_j^4))$ für jeden der Werte $T_j$, wobei $\beta$ = 700 bis 1100 Wm$^{-2}$ und $\mu$ = 0,8 bis 1,2 gilt,

c.3') Bestimmung des Wertes $T_j$, bei welchem die Differenz A - B$_j$ dem Zahlenwert Null am nächsten kommt, und

c.4') Definition des nach Schritt c.3) bestimmten Wertes $T_j$ als den Wert für die zweite Lufttemperatur $T_{L2}$.

Die Vorgabe eine Vielzahl von möglichen Temperaturwerten $T_j$ für die zweite Lufttemperatur $T_{L2}$ bedeutet, dass zahlreiche Werte $T_j$ vorgegeben werden, die potentiell dem Wert für die zweite Lufttemperatur $T_{L2}$ entsprechen. Üblicherweise werden beispielsweise Werte $T_j$ zwischen 273,15 K und 333,15 K gewählt, da dies übliche Lufttemperaturen an der Erdoberfläche sind.

Die zweite Maximaltemperatur $T_{max2}$ ist vorzugsweise in Schritt c.ii) so gewählt, dass die folgende mathematische Beziehung erfüllt ist:

$$\beta \times \alpha_{s1} = \mu \times (h_{w1} \times (T_{max2} - T_{L1}) + 5{,}415 \times 10^{-8}(T_{max2}^4 - 0{,}9T_{L1}^4)),$$

wobei $\mu$ = 0,8 bis 1,2 gilt und $\beta$ = 700 bis 1100 Wm$^{-2}$ gilt und/oder der Wert $\beta$, so ausgewählt wird, dass er einer Sonnenintensität $I_s$ der potentiellen Beschichtungslokalität am nächsten kommt, vorzugsweise der Sonnenintensität $I_s$ entspricht. Ein geeigneter Wert für $T_{max2}$ kann vorzugsweise durch ein Iterationsverfahren umfassend die folgenden Schritte bestimmt werden:

c.1) Vorgabe eine Vielzahl von möglichen Temperaturwerten $T_i$ für die zweite Maximaltemperatur $T_{max2}$,

c.2) Bestimmung von A = $\beta \times \alpha_{s1}$ und von B$_i$ = $\mu \times (h_{w1} \times (T_i - T_{L1}) + 5{,}415 \times 10^{-8}(T_i^4 - 0{,}9T_{L1}^4))$ für jeden der Werte $T_i$, wobei $\mu$ = 0,8 bis 1,2 gilt und $\beta$ = 700 bis 1100 Wm$^{-2}$ gilt und/oder der Wert $\beta$, so ausgewählt wird, dass er einer Sonnenintensität $I_s$ der potentiellen Beschichtungslokalität am nächsten kommt, vorzugsweise der Sonnenintensität $I_s$ entspricht,

c.3) Bestimmung des Wertes $T_i$, bei welchem die Differenz A - B$_i$ dem Zahlenwert Null am nächsten kommt, und

c.4') Definition des nach Schritt c.3) bestimmten Wertes $T_i$ als den Wert für $T_{max2}$.

Die Vorgabe eine Vielzahl von möglichen Temperaturwerten $T_i$ für die zweite Lufttemperatur $T_{max2}$ bedeutet, dass zahlreiche Werte $T_i$ vorgegeben werden, die potentiell dem Wert für die zweite Lufttemperatur $T_{max2}$ entsprechen. Üblicherweise werden beispielsweise Werte $T_i$ zwischen 273,15 K und 433,15 K gewählt und als potentielle Werte für

die zweite Maximaltemperatur $T_{max2}$ angesehen.

Vorstehend wurden mehrere mathematische Gleichungen wiedergegeben. Besagte mathematische Gleichungen stehen selbstverständlich auch für alle mathematischen Gleichungen, welche sich durch Äquivalenzumformung ergeben. Soweit also mathematisch äquivalente Formulierungen gewählt werden, ändert dies den Gegenstand der Gleichung im Sinne der vorliegenden Erfindung nicht, insbesondere wenn der Satz an Parametern, welcher die Gleichung erfüllt, identisch ist. Beispielsweise kann das vorstehende Verfahren zur Bestimmung von $T_{max2}$ auch mathematisch äquivalent wie folgt beschrieben werden:

c.1) Vorgabe eine Vielzahl von möglichen Temperaturwerten $T_i$ für die zweite Maximaltemperatur $T_{max2}$,

c.2) Bestimmung von $X_i = \beta \times \alpha_{s1} + \left( h_{w1} \times (T_{L1} - T_i) + 5{,}415 \times 10^{-8}(0{,}9 T_{L1}^4 - T_i^4) \right)$ für jeden der Werte $T_i$, wobei $\mu = 0{,}8$ bis $1{,}2$ gilt und $\beta = 700$ bis $1100$ Wm$^{-2}$ gilt und/oder der Wert $\beta$, so ausgewählt wird, dass er einer Sonnenintensität $I_s$ der potentiellen Beschichtungslokalität am nächsten kommt, vorzugsweise der Sonnenintensität $I_s$ entspricht,

c.3) Bestimmung des Wertes $T_i$, bei welchem $X_i$ dem Wert Null am nächsten kommt, und

c.4') Definition des nach Schritt c.3) bestimmten Wertes $T_i$ als den Wert für $T_{max2}$.

Bei der Vielzahl an möglichen Temperaturwerten $T_i$ für die zweite Maximaltemperatur $T_{max2}$ in Schritt c.1) bzw. der Vielzahl an möglichen Temperaturwerten $T_j$ für die zweite Lufttemperatur $T_{L2}$ bzw. c.1') ist es bevorzugt, wenn besagte möglichen Temperaturwerte $T_i$ und/oder $T_j$ jeweils eine mittlere Temperaturdifferenz zu den nächstliegenden Temperaturwerten $T_i$ bzw. $T_j$ aufweisen. Vorzugsweise ist diese mittlere Temperaturdifferenz kleiner als 2 K, insbesondere kleiner als 1 K, insbesondere bevorzugt kleiner als 0,5 K, ganz besonders bevorzugt kleiner als 0,3 K, beispielsweise aus dem Bereich von 0,001 bis 0,3 K. Alternativ oder zusätzlich ist es bevorzugt, wenn die Vielzahl von möglichen Temperaturwerten $T_i$ bzw. $T_j$ Werte aus dem Temperaturbereich von 273,15 bis 673,15 K, insbesondere 273,15 bis 473,15 K, umfasst oder aus Werten dieses Temperaturbereichs besteht. Alternativ oder zusätzlich ist es ferner bevorzugt, dass der mittlere Temperaturabstand von mindestens zehn Werten der Vielzahl von möglichen Temperaturwerten $T_i$ und/oder $T_j$, insbesondere von mindestens einhundert Werten, vorzugsweise von mindestens fünfhundert Werten, kleiner als 2 K, insbesondere kleiner als 1 K, insbesondere bevorzugt kleiner als 0,6 K, ganz besonders bevorzugt kleiner als 0,3 K, ist, beispielsweise aus dem Bereich von 0,001 bis 0,3 K. In einer besonders geeigneten Ausführungsform sind die Temperaturwerte $T_i$ und/oder $T_j$ jeweils mit einer festen Temperaturdifferenz voneinander beanstandet, insbesondere einer Temperaturdifferenz von 0,001 bis 1 K, vorzugsweise von 0,01 bis 0,6 K, insbesondere bevorzugt von 0,1 bis 0,3 K. Je enger die Werte gesetzt werden, desto exakter ist die Bestimmung. Allerdings ist der Bestimmungsaufwand mit steigender Anzahl an Werten höher. Bei einem festen Temperaturabstand von 0,2 K ergeben sich beispielsweise die Werte $T_i$ oder $T_j$ von 273,15 K, 273,35 K, 273,55 K, 273,75 K, 273,95 K, 274,15 K, 274,35 K, 274,55 K, 274,75 K, 274,95 K, 275,15 K, 275,35 K, 275,55 K, etc., wenn bei 273,15 K begonnen wird. Die mittlere Temperaturdifferenz beträgt in diesem Fall ebenfalls 0,2 K für die besagten Werte $T_i$ bzw. $T_j$. Der Temperaturabstand von mindestens zehn Werten der genannten Temperaturwerte $T_i$ bzw. $T_j$, ist in dem Beispiel kleiner 0,3 K.

In einer zweckmäßigen Ausgestaltung hat es sich als vorteilhaft erwiesen, wenn der Wert $\beta$ aus dem Bereich von 750 bis 1050 Wm$^{-2}$, insbesondere 795 bis 1000 Wm$^{-2}$, vorzugsweise 900 bis 1000 Wm$^{-2}$ ausgewählt ist. In einer besonders bevorzugten Ausgestaltung kann $\beta$ auf den Wert 1000 Wm$^{-2}$ festgelegt sein. Es hat sich gezeigt, dass dies zu besonders genauen Grenzparametern führt.

In einer weiteren Ausgestaltung ist es bevorzugt, wenn der Wert $\beta$ so ausgewählt wird, dass er der Sonnenintensität $I_s$ der potentiellen Beschichtungslokalität am nächsten kommt, vorzugsweise der Sonnenintensität $I_s$ entspricht. In einer Ausgestaltung kann also der Wert $\beta$ synonym zur Sonnenintensität $I_s$ sein und damit durch diese ersetzt werden. Ganz besonders bevorzugt ist es, wenn der Wert $\beta$ aus dem Bereich 700 bis 1100 Wm$^{-2}$ so ausgewählt wird, dass er der Sonnenintensität $I_s$ der potentiellen Beschichtungslokalität am nächsten kommt. Ist die Sonnenintensität $I_s = 800$, so beträgt in dieser Ausführungsform der Wert $\beta$ ebenfalls 800. Ist die Sonnenintensität $I_s = 500$, ist der Wert $\beta = 700$, da dieser aus dem Bereich 700 bis 1100 Wm$^{-2}$ dem Wert 500 am nächsten kommt. Es hat sich gezeigt, dass der Wert $\beta$ über die Sonnenintensität weiter konkretisiert werden kann, was die Zuverlässigkeit des Verfahrens bei der Verminderung der Gefahr einer Fassadenbeschädigung und/oder Überhitzung nochmals verbessert. Auch kann es alternativ vorgesehen sein, dass der Wert $\beta$ der Sonnenintensität $I_s$ entspricht und auf keinen Bereich eingeschränkt ist.

Vorzugsweise ist der Wert $\mu$ aus dem Bereich von 0,85 bis 1,15, insbesondere 0,95 bis 1,05, ausgewählt. Besagte Werte von $\mu$ haben sich als besonders geeignet erwiesen, eine genaue Vorhersage zu ermöglichen. In einer besonders geeigneten Ausgestaltung des Verfahrens ist der Wert $\mu = 1$.

Ferner ist es bevorzugt, wenn der $\alpha_{s1}$ und/oder $T_{max1}$ in Schritt a) durch die Auswahl der Fassadenbeschichtung automatisch vorgegeben wird, wobei Schritt a) die folgenden Unterschritte umfasst:

a1) Vorgabe einer Fassadenbeschichtung, insbesondere Auswahl einer Fassadenbeschichtung aus einer Liste, vorzugsweise einer digitalen Dropdown-Liste,

a2) Abgleich der Fassadenbeschichtung mit einer ersten Datenbank, wobei die erste Datenbank Werte für $\alpha_{s1}$ und/oder $T_{max1}$ von Fassadenbeschichtungen umfasst,

a3) Übertragung der Werte für $\alpha_{s1}$ und/oder $T_{max1}$ aus der ersten Datenbank.

Hierbei kann es vorgesehen sein, dass ein Nutzer mit einer grafischen Benutzeroberfläche einer Computersoftware, welche das Verfahren implementiert, eine Fassadenbeschichtung auswählt. Die Computersoftware umfasst vorzugsweise eine erste Datenbank und/oder hat Zugriff auf eine erste Datenbank eines Servers über eine erste Datenverbindung. In besagter erster Datenbank sind vorzugsweise Werte für $\alpha_{s1}$ und/oder $T_{max1}$ für die Fassadenbeschichtungen gespeichert, welche von der Computersoftware abgerufen werden. Mithin muss der Nutzer keine Kenntnis von den Werten $\alpha_{s1}$ und/oder $T_{max1}$ haben - er muss diese Werte auch gar nicht verstehen - und kann diese trotzdem nutzen. Dies erleichtert die Nutzung des Verfahrens ganz erheblich und vermindert die Gefahr, dass der Nutzer aus Unkenntnis falsche Werte angibt, was zu einer Fassadenbeschädigung und/oder Überhitzung führen kann. Auch muss der Nutzer die Werte nicht selbst herausfinden.

Ferner ist es bevorzugt, wenn der Wert $T_{L1}$ und/oder $h_{w1}$, insbesondere auch der Wert $I_s$, in Schritt b) durch die Auswahl der Beschichtungslokalität automatisch vorgegeben wird, wobei Schritt b) die folgenden Unterschritte umfasst:

b1) Vorgabe einer Beschichtungslokalität, insbesondere Auswahl einer Fassadenbeschichtung aus einer digitalen Liste, vorzugsweise einer digitalen Dropdown-Liste,

b2) Abgleich der Beschichtungslokalität mit der ersten oder zweiten Datenbank, wobei die erste oder zweite Datenbank Werte für $T_{L1}$ und/oder $h_{w1}$, insbesondere auch für $I_s$, von Beschichtungslokalitäten umfasst, und

b3) Übertragung der Werte für $T_{L1}$ und/oder $h_{w1}$, insbesondere auch für $I_s$, aus der ersten oder zweiten Datenbank.

Hierbei kann es vorgesehen sein, dass ein Nutzer mit einer grafischen Benutzeroberfläche einer Computersoftware, welche das Verfahren implementiert, eine Beschichtungslokalität auswählt. Die Computersoftware umfasst vorzugsweise die erste Datenbank und/oder hat Zugriff auf die erste Datenbank eines Servers über die erste Datenverbindung oder umfasst eine zweite Datenbank und/oder hat Zugriff auf eine zweite Datenbank eines Servers über eine zweite Datenverbindung. In besagter erster und/oder zweiter Datenbank sind vorzugsweise Werte für $T_{L1}$ und/oder $h_{w1}$, insbesondere auch für $I_s$, für die Beschichtungslokalitäten gespeichert, welche von der Computersoftware abgerufen werden. Mithin muss der Nutzer keine Kenntnis von den Werten $T_{L1}$ und/oder $h_{w1}$, insbesondere $T_{L1}$, $h_{w1}$ und/oder $I_s$, haben - er muss diese Werte auch nicht verstehen. Dies erleichtert die Nutzung des Verfahrens ganz erheblich und vermindert die Gefahr, dass der Nutzer aus Unkenntnis falsche Werte angibt, was zu einer Fassadenbeschädigung und/oder Überhitzung führen kann. Auch muss der Nutzer die Werte nicht selbst herausfinden.

Auch ist es bevorzugt, wenn bei dem erfindungsgemäßen Verfahren eine Gebäudeabbildung mit der Fassadenbeschichtung automatisch computersimuliert und auf dem Display wiedergegeben wird, wobei die Gebäudeabbildung eine erste Oberfläche und eine zweite und/oder dritte Oberfläche umfasst, wobei die erste Oberfläche automatisch mit einer ersten Färbung gefärbt wird, welche einer Färbung der Farbeschichtung im Wesentlichen entspricht, wobei die zweite Oberfläche eine fest vorgegebene zweite Färbung aufweist und/oder wobei die dritte Oberfläche automatisch mit einer dritten Färbung gefärbt wird. Sofern die dritte Oberfläche umfasst ist, ist es bevorzugt, wenn die dritte Färbung im LCh-Farbraum durch die Werte $L_3$, $C_3$, $h_3$ die erste Färbung im LCh-Farbraum durch die Werte $L_1$, $C_1$, $h_1$ charakterisiert sind, wobei $L_3 < L_1$ und $C_1 = C_3 \pm 10$, insbesondere $C_1 = C_3$, und/oder $h_1 = h_3 \pm 20°$, insbesondere $h_1 = h_3$, gilt. Vorzugsweise ist dabei die Differenz zwischen L1 und L3 mindestens 5, insbesondere mindestens 15, insbesondere bevorzugt mindestens 25. Die erste Färbung entspricht der Färbung der Farbeschichtung im Wesentlichen, wenn $L_0 = L_1 \pm 10$ und $C_0 = C_1 \pm 10$ und/oder $h_0 = h_1 \pm 20°$ gilt, wobei besagte Farbeschichtung im LCh-Farbraum durch die Werte $L_0$, $C_0$, $h_0$ charakterisiert ist. Es hat sich gezeigt, dass besonders aussagekräftige simulierte Gebäudeabbildungen mit besagter ersten und zweiten und/oder dritten Oberfläche erstellbar sind. Dies erleichtert eine Auswahl der Farben, insbesondere die Suche nach Farben, welche einen speziellen Farbeindruck hinterlassen. Der Nutzer kann wenn eine erste Farbe gemäß dem Verfahren ungeeignet ist, ähnliche Farben auswählen, und deren Eignung bestimmen. Mithin ist es einfacher möglich, einem Kundewunsch nach einer Farbe nachzukommen und zugleich die Eignung der Farbe für die Beschichtungslokalität zu gewährleisten. Auch wird es dem Kunden erleichtert, anhand der Farbe eines Gebäudes schneller und zuverlässiger eine Schätzung der zweiten Maximaltemperatur $T_{max2}$ mithilfe des erfindungsgemäßen Verfahrens abzugeben, indem er eine in der Software eine ähnliche Farbe auswählt, mithin den Absorptionskoeffizient nicht messen muss.

Die Erfindung betrifft auch ein Computerprogrammprodukt, das ein computerlesbares Medium umfasst, auf dem ein Computerprogrammcode gespeichert ist, der konfiguriert ist, die Schritte a) bis d) des erfindungsgemäßen Verfahrens in einem Computer auszuführen, insbesondere ein Computerprogrammprodukt ausgelegt und eingerichtet zur Berechnung einer zweiten Maximaltemperatur $T_{max2}$ und/oder zur Erstellung der Gebäudesimulation, insbesondere die Schritte a) bis c), a) bis d) und/oder a) bis e). Dies gilt nicht für den Schritt f), da ein Computerprogrammprodukt eine Beschichtung an der Beschichtungslokalität einer Fassade mit einer als geeignet spezifizierten Beschichtungsmasse nicht eigenständig vornehmen kann. Schritt f) betrifft das tatsächliche Aufbringen der Beschichtung, beispielsweise durch einen Maler, Anstreicher oder Lackierer.

Die Erfindung betrifft die Verwendung des besagten Computerprogrammprodukts, welches ausgelegt und eingerichtet ist, das beschriebene Verfahren zu implementieren, für die Bestimmung geeigneter Fassadenbeschichtungen für eine Beschichtungslokalität. Die Erfindung betrifft ferner die Verwendung des besagten Computerprogrammprodukts, welches ausgelegt und eingerichtet ist, das beschriebene Verfahren zu implementieren, für die Bestimmung der maximalen Oberflächentemperatur einer mit einer Fassadenbeschichtung beschichteten Fassade. Auch betrifft die Erfindung die Verwendung des besagten Computerprogrammprodukts zur Verringerung der Gefahr eine Fassadenbeschädigung und zur Verringerung der Gefahr einer Überhitzung von Innenräumen.

Die Erfindung betrifft ferner die Verwendung eines Computerprogrammprodukts, in welchem die Gleichung

$$\beta \times \alpha_s = \mu \times (h_w \times (T_{max} - T_L) + 5{,}415 \times 10^{-8}(T_{max}^4 - 0{,}9T_L^4))$$ implementiert ist, insbesondere mit den vorstehend beschriebenen Parametern, für die Bestimmung geeigneter Fassadenbeschichtungen für eine Beschichtungslokalität und/oder für die Bestimmung der maximalen Oberflächentemperatur einer mit einer Fassadenbeschichtung beschichteten Fassade und/oder für die Verringerung der Gefahr eine Fassadenbeschädigung und zur Verringerung der Gefahr einer Überhitzung von Innenräumen. Hierbei stehen drei der Werte $h_w$, $T_{max}$, $T_L$, $\alpha_s$ für $h_{w1}$, $T_{max1}$, $T_{L1}$ bzw. $\alpha_{s1}$ und der verbleibende Wert für $h_{w2}$, $T_{max2}$, $T_{L2}$ oder $\alpha_{s2}$, insbesondere $T_{max2}$. Mit der Implementierung der Gleichung

$$\beta \times \alpha_s = \mu \times (h_w \times (T_{max} - T_L) + 5{,}415 \times 10^{-8}(T_{max}^4 - 0{,}9T_L^4))$$ sind auch alle mathematisch äquivalenten Formulierungen gemeint.

Nachstehend wird ein Ausführungsbeispiel für das Verfahren gezeigt. Der erste Absorptionskoeffizient $\alpha_{s1}$ = 0,855 einer potentiellen Beschichtungsmassen, die Sonnenintensität $I_s$ = 900 W/m², die erste Lufttemperatur 30°C und der ersten Wärmeübergangskoeffizient $h_{w1}$ = 9 W/(m2*K) werden in dem Ausführungsbeispiel für eine potentielle Beschichtungslokalität vorgegeben. Die erste Lufttemperatur entspricht einer Temperatur in Kelvin von $T_{L1}$ = 30 + 273,15 K = 303,15 K. Es wird davon ausgegangen, dass $\beta = I_s$ und $\mu = 1$ gilt. Die Werte A und B werden für zahlreiche Werte $T_i$ bestimmt nach der folgenden Gleichung:

$$A = \beta \times \alpha_{s1} \text{ und von } B_i = \mu \times (h_{w1} \times (T_i - T_{L1}) + 5{,}415 \times 10^{-8}(T_i^4 - 0{,}9T_{L1}^4)).$$

A ist daher konstant 769,5 W/m². Es ergeben sich folgende Werte für $B_i$ in W/m² und für die Differenz A - $B_i$ in W/m², welche nachfolgend als $C_i$ bezeichnet wird (C = A - $B_i$):

| | | | | | |
|---|---|---|---|---|---|
| $T_i$ = 344,55 K | $B_i$ = 724,15 | $C_i$ = 45,35 | $T_i$ = 347,15 K | $B_i$ = 770,85 | $C_i$ = -1,35 |
| $T_i$ = 344,75 K | $B_i$ = 727,72 | $C_i$ = 41,78 | $T_i$ = 347,35 K | $B_i$ = 774,46 | $C_i$ = -4,96 |
| $T_i$ = 344,95 K | $B_i$ = 731,30 | $C_i$ = 38,20 | $T_i$ = 347,55 K | $B_i$ = 778,08 | $C_i$ = -8,58 |
| $T_i$ = 345,15 K | $B_i$ = 734,88 | $C_i$ = 34,62 | $T_i$ = 347,75 K | $B_i$ = 781,70 | $C_i$ = -12,20 |
| $T_i$ = 345,35 K | $B_i$ = 738,46 | $C_i$ = 31,04 | $T_i$ = 347,95 K | $B_i$ = 785,32 | $C_i$ = -15,82 |
| $T_i$ = 345,55 K | $B_i$ = 742,05 | $C_i$ = 27,45 | $T_i$ = 348,15 K | $B_i$ = 788,95 | $C_i$ = -19,45 |
| $T_i$ = 345,75 K | $B_i$ = 745,64 | $C_i$ = 23,86 | $T_i$ = 348,35 K | $B_i$ = 792,58 | $C_i$ = -23,08 |
| $T_i$ = 345,95 K | $B_i$ = 749,23 | $C_i$ = 20,27 | $T_i$ = 348,55 K | $B_i$ = 796,21 | $C_i$ = -26,71 |
| $T_i$ = 346,15 K | $B_i$ = 752,82 | $C_i$ = 16,68 | $T_i$ = 348,75 K | $B_i$ = 799,85 | $C_i$ = -30,35 |
| $T_i$ = 346,35 K | $B_i$ = 756,42 | $C_i$ = 13,08 | $T_i$ = 348,95K | $B_i$ = 803,49 | $C_i$ = -33,99 |

(fortgesetzt)

| $T_i$ = 346,55 K | $B_i$ = 760,02 | $C_i$ = 9,48 | $T_i$ = 349,15 K | $B_i$ = 807,13 | $C_i$ = -37,63 |
|---|---|---|---|---|---|
| $T_i$ = 346,75 K | $B_i$ = 763,63 | $C_i$ = 5,87 | $T_i$ = 349,35 K | $B_i$ = 810,77 | $C_i$ = -41,27 |
| $T_i$ = 346,95 K | $B_i$ = 767,24 | $C_i$ = 2,26 | $T_i$ = 349,55 K | $B_i$ = 814,42 | $C_i$ = -44,92 |

Die Werte $T_i$ sind jeweils 0,2 K voneinander beanstandet. Zumeist wird ein größerer Temperaturbereich statt von 344,55 K bis 349,55 K verwendet, allerdings wurde vorliegend auf eine umfassende Darstellung der entsprechenden Tabelle aus Platzgründen verzichtet. Der Wert $T_i$ von 347,15 K korreliert mit einem C-Wert von -1,35 und hier ist die Differenz A-B dem Wert Null am nächsten. Daher wird die Temperatur von 347,15 K bzw. 74°C als $T_{max2}$ definiert. In dem Ausführungsbeispiel kann es ferner vorgesehen sein, dass der Wert $T_{max2}$ mit einer ersten Maximaltemperatur $T_{max1}$ der Beschichtungszusammensetzung verglichen wird und eine Beschichtung der Fassade an der Beschichtungslokalität erfolgt, wenn $T_{max2}$ < $T_{max1}$ gilt. Es kann erfindungsgemäß auch vorgesehen sein, eine weitere Iterationsrunde vorzunehmen, welche sich um den Temperaturbereich von 347,15 K herum konzentriert. Dies erlaubt eine noch genauere Bestimmung der zweiten Maximaltemperatur $T_{max2}$. Es sei darauf hingewiesen, dass der Absorptionskoeffizient in dem Ausführungsbeispiel vorstehend recht hoch gewählt wurde und oftmals auch unter 0,5 liegen kann.

Mit der vorliegenden Erfindung ist es überraschenderweise gelungen, ein Verfahren bereitzustellen, nach welchem vorhergesagt werden kann, ob eine Fassade in einer bestimmten Umgebung mit einer Fassadenbeschichtung versehen werden sollte bzw. gefahrlos versehen werden kann. Soweit das Verfahren eine solche Eignung bestätigt, kann auf eine experimentelle Untersuchung verzichtet werden. Es ist mithin nicht mehr nötig, die Fassade testweise zu beschichten und für Monate oder Jahre der Witterung auszusetzen, um eine Eignung festzustellen. Obgleich es auch andere Verfahren geben mag, welche eine solche Vorhersage ermöglichen (beispielsweise Erfahrungswerte des Malers für weiße Farben), ist es nunmehr möglich, auch Fassadenfarben, welche vormals als kritisch oder grenzwertig für bestimmte Standorte eingestuft wurden, genauer zu evaluieren. Insgesamt werden hierdurch in erheblichem Maße Kosten eingespart und Gestaltungsspielräume des Malers erweitert. Des Weiteren ist es mit Hilfe des Computerprogrammprodukts ebenfalls möglich, bei Nichteignung der ursprünglich ausgewählten Fassadenfarbe eine alternative, nach den genannten Berechnungsmethoden geeignete, ggf. ähnliche Fassadenfarbe zu ermitteln. Auch kann das Verfahren überwiegend automatisiert unter Verwendung eines Computers durchgeführt werden, was die Kosten ebenfalls senkt. Bisherige Verfahren waren teilweise hochkompliziert, wobei Ausrichtungen der Wände, die Abschattungen durch Vegetation oder Regen berücksichtigt wurden. Es hat sich nunmehr überraschend gezeigt, dass ein deutlich vereinfachtes Verfahren eine hinreichend exakte Bestimmung ermöglicht, um zuverlässige Aussagen zu der Gefahr einer Fassadenbeschädigung und/oder zu der Gefahr einer Überhitzung der Fassaden und/oder Innenräume zu treffen.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:

Figur 1      eine schematische Übersicht über einige wichtige Schritte in einer möglichen Ausführungsform des Verfahrens;

Figur 2      eine Eingabemaske eine Ausführungsform der erfindungsgemäßen Computersoftware; und

Figur 3      eine grafische Benutzeroberfläche einer Ausführungsform der erfindungsgemäßen Computersoftware.

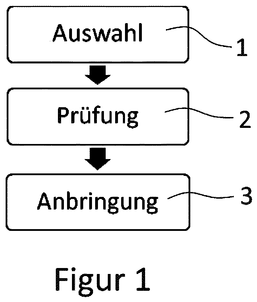

Figur 1 zeigt drei Schritte eines möglichen Verfahrens, wobei der Nutzer in Schritt 1 eine potentielle Fassadenbeschichtung und eine Beschichtungslokalität auswählt, in Schritt 2 prüft, ob die Fassadenbeschichtung geeignet ist und in Schritt 3 diese an der Beschichtungslokalität anbringt. Die Prüfung in Schritt 2 umfasst die Berücksichtigung von Parametern zur Fassadenbeschichtung und zur Beschichtungslokalität wie dies in der Beschreibung vorstehend dargelegt wurde.

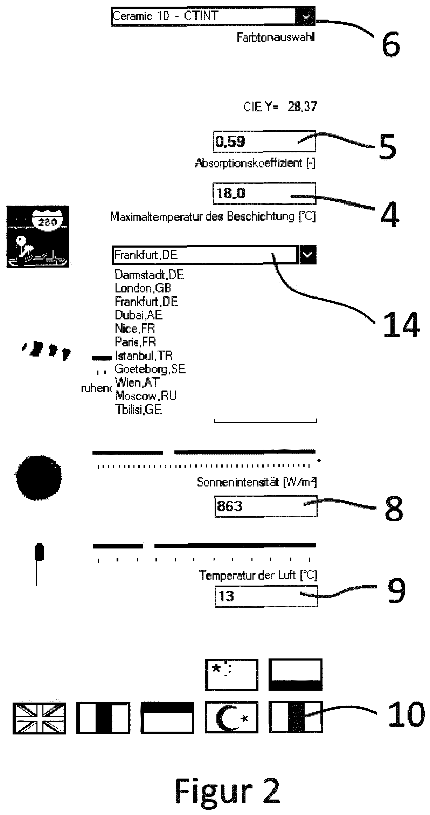

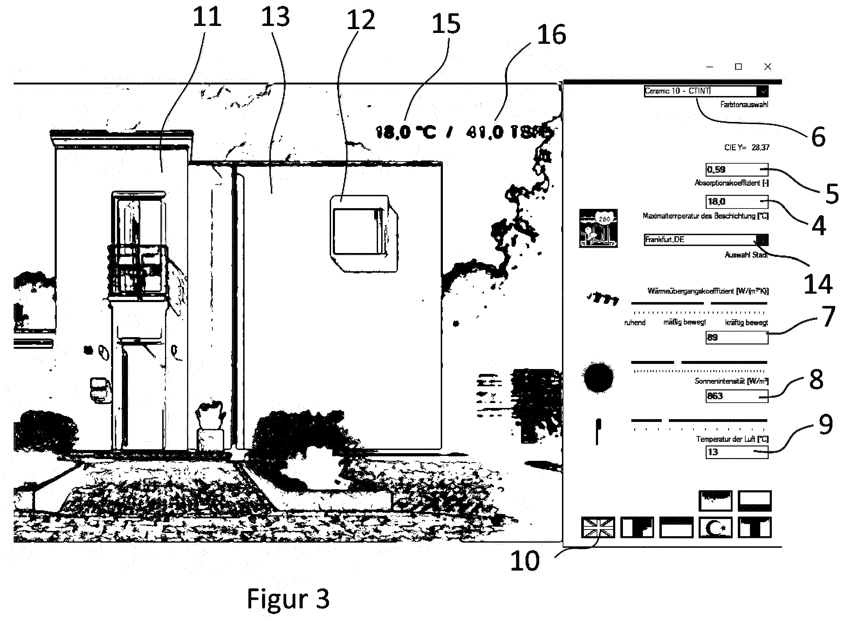

Figur 2 zeigt eine Eingabemaske einer Ausführungsform der erfindungsgemäßen Computersoftware, wobei hier die zweite Maximaltemperatur $T_{max2}$ berechnet wird. Es ist eine Dropdown-Liste 6 vorgesehen, mit welcher eine Fassadenbeschichtung ausgewählt werden kann. Hierdurch wird der resultierende erste Absorptionskoeffizient $\alpha_{s1}$ in Eingabefeld 5 der Fassadenbeschichtung wiedergegeben. Auch ist es auch möglich, den ersten Absorptionskoeffizienten $\alpha_{s1}$ manuell über das Eingabefeld 5 festzulegen. Es ist ferner eine Dropdown-Liste 14 vorgesehen, mit welcher eine Beschichtungslokalität ausgewählt werden kann. Die entfaltete Dropdown-Liste 14 verdeckt das Eingabefeld für den ersten Wärmeübertragungskoeffizienten $h_{w1}$ (vgl. Fig. 3). Auch sind eine erste Lufttemperatur $T_{L1}$ und eine Sonnenintensität $I_s$ durch die Beschichtungslokalität in den Eingabefeldern 8 und 9 vorgegeben, können aber auch manuell festgelegt werden. Ferner ist eine Sprachauswahl 10 vorgesehen, wobei vorliegend die Sprache Deutsch gewählt wurde. Das Ergebnis in Form der zweiten Maximaltemperatur wird in dem Ergebnisfeld 4 angezeigt.

Figur 3 zeigt auf der rechten Seite nochmals die Eingabemaske der Figur 2, wobei die Dropdown-Liste 14 nicht mehr das Eingabefeld 7 für den Wärmeübertragungskoeffizienten $h_{w1}$ verdeckt. Auf der linken Seite ist ein Gebäude mit einer ersten Oberfläche 11, einer zweiten Oberfläche 12 und einer dritten Oberfläche 13 gezeigt. Die Maximaltemperatur $T_{max2}$ ist als Ergebnis der Werte in den Eingabefeldern 4, 5, 5, 8, 9 auf der linken Seite gezeigt. Besagtes Ergebnis wird nicht nur in Ergebnisfeld 4 angezeigt, sondern auch im Bereich 15 zusammen mit dem korrespondierenden TSR-Wert auf der linken Seite im Simulationsfenster 16. Die erste Maximaltemperatur $T_{max1}$ kann in dieser Ausführungsform nicht vorgegeben werden.

Die in der voranstehenden Beschreibung, den Ansprüchen sowie den Zeichnungen und dem Ausführungsbeispiel offenbarten Merkmale der Erfindung können sowohl einzeln als auch in jeder beliebigen Kombination für die Verwirklichung der Erfindung in ihren verschiedenen Ausführungsformen wesentlich sein.

**Patentansprüche**

1. Verfahren zur Bestimmung eines Grenzwertparameters, insbesondere zur Verminderung der Gefahr einer Fassadenbeschädigung und/oder Überhitzung, umfassend die folgenden Schritte:

    a) Auswahl einer potentiellen Fassadenbeschichtung mit einem ersten Absorptionskoeffizienten $\alpha_{s1}$ und/oder mit einer ersten Maximaltemperatur $T_{max1}$,
    b) Auswahl einer potentiellen Beschichtungslokalität mit einer ersten Lufttemperatur $T_{L1}$ und mit einem ersten Wärmeübertragungskoeffizienten $h_{w1}$ sowie vorzugsweise der Sonnenintensität $I_s$,
    c) Bestimmung

        c.i) eines zweiten Absorptionskoeffizienten $\alpha_{s2}$ mit $T_{max1}$, $T_{L1}$, $h_{w1}$, oder
        c.ii) einer zweiten Maximaltemperatur $T_{max2}$ mit $\alpha_{s1}$, $T_{L1}$, $h_{w1}$, oder
        c.iii) einer zweiten Lufttemperatur $T_{L2}$ mit $T_{max1}$, $\alpha_{s1}$, $h_{w1}$, oder
        c.iv) eines zweiten Wärmeübertragungskoeffizienten $h_{w2}$ mit $T_{max1}$, $\alpha_{s1}$, $T_{L1}$,

    d) vorzugsweise Ausgabe eines in Schritt c) erhaltenen Wertes auf einem Display,
    e) vorzugsweise Spezifizierung der potentiellen Fassadenbeschichtung, vorzugsweise als geeignet, für die Beschichtungslokalität, wenn eine der nachstehenden Voraussetzungen erfüllt ist:

$$\alpha_{s1} < \alpha_{s2} \text{ oder } T_{max1} > T_{max2} \text{ oder } T_{L1} < T_{L2} \text{ oder } h_{w1} < h_{w2},$$

    f) vorzugsweise Beschichtung einer Fassade an der Beschichtungslokalität mit der, insbesondere als geeignet, spezifizierten Fassadenbeschichtung.

2. Verfahren nach Anspruch 1, **dadurch gekennzeichnet, dass** in Schritt c.i) $\alpha_{s2}$ so gewählt wird, dass die folgende mathematische Beziehung erfüllt ist:

$$\beta \times \alpha_{s2} = \mu \times (h_{w1} \times (T_{max1} - T_{L1}) + 5{,}415 \times 10^{-8}(T_{max1}^4 - 0{,}9 T_{L1}^4)),$$

oder
in Schritt c.ii) $T_{max2}$ so gewählt wird, dass die folgende mathematische Beziehung erfüllt ist:

$$\beta \times \alpha_{s1} = \mu \times (h_{w1} \times (T_{max2} - T_{L1}) + 5{,}415 \times 10^{-8}(T_{max2}^4 - 0{,}9 T_{L1}^4)),$$

oder
in Schritt c.iii) $T_{L2}$ so gewählt wird, dass die folgende mathematische Beziehung erfüllt ist:

$$\beta \times \alpha_{s1} = \mu \times (h_{w1} \times (T_{max1} - T_{L2}) + 5{,}415 \times 10^{-8}(T_{max1}^4 - 0{,}9 T_{L2}^4)),$$

oder in Schritt c.iv) $h_{w2}$ so gewählt wird, dass die folgende mathematische Beziehung erfüllt ist:

$$\beta \times \alpha_{s1} = \mu \times (h_{w2} \times (T_{max1} - T_{L1}) + 5{,}415 \times 10^{-8}(T_{max1}^4 - 0{,}9T_{L1}^4)),$$

wobei jeweils $\mu$ = 0,8 bis 1,2 gilt und der Wert $\beta$ der Sonnenintensität $I_s$ entspricht.

3. Verfahren nach Anspruch 1 oder 2, **dadurch gekennzeichnet, dass** in Schritt c.i) $\alpha_{s2}$ so gewählt wird, dass die folgende mathematische Beziehung erfüllt ist:

$$\beta \times \alpha_{s2} = \mu \times (h_{w1} \times (T_{max1} - T_{L1}) + 5{,}415 \times 10^{-8}(T_{max1}^4 - 0{,}9T_{L1}^4)),$$

oder
in Schritt c.ii) $T_{max2}$ so gewählt wird, dass die folgende mathematische Beziehung erfüllt ist:

$$\beta \times \alpha_{s1} = \mu \times (h_{w1} \times (T_{max2} - T_{L1}) + 5{,}415 \times 10^{-8}(T_{max2}^4 - 0{,}9T_{L1}^4)),$$

oder
in Schritt c.iii) $T_{L2}$ so gewählt wird, dass die folgende mathematische Beziehung erfüllt ist:

$$\beta \times \alpha_{s1} = \mu \times (h_{w1} \times (T_{max1} - T_{L2}) + 5{,}415 \times 10^{-8}(T_{max1}^4 - 0{,}9T_{L2}^4)),$$

oder
in Schritt c.iv) $h_{w2}$ so gewählt wird, dass die folgende mathematische Beziehung erfüllt ist:

$$\beta \times \alpha_{s1} = \mu \times (h_{w2} \times (T_{max1} - T_{L1}) + 5{,}415 \times 10^{-8}(T_{max1}^4 - 0{,}9T_{L1}^4)),$$

wobei jeweils $\beta$ = 700 bis 1100 Wm$^{-2}$ und $\mu$ = 0,8 bis 1,2 gilt.

4. Verfahren nach einem der vorangehenden Ansprüche, **dadurch gekennzeichnet, dass**
die Bestimmung von $T_{max2}$ in Schritt c.ii) folgende Schritte oder mathematisch äquivalente Schritte umfasst:

    c.1) Vorgabe eine Vielzahl von möglichen Temperaturwerten $T_i$ für die Maximaltemperatur $T_{max2}$,

    c.2) Bestimmung von A = $\beta \times \alpha_{s1}$ und von B = $\mu \times (h_{w1} \times (T_i - T_{L1}) + 5{,}415 \times 10^{-8}(T_i^4 - 0{,}9T_{L1}^4))$ für jeden Wert $T_i$, wobei $\mu$ = 0,8 bis 1,2 gilt und $\beta$ = 700 bis 1100 Wm$^{-2}$ gilt und/oder der Wert $\beta$, so ausgewählt wird, dass er einer Sonnenintensität $I_s$ der potentiellen Beschichtungslokalität am nächsten kommt, vorzugsweise der Sonnenintensität $I_s$ entspricht,

    c.3) Bestimmung des Wertes $T_i$, bei welchem $A$ - $B$ dem Zahlenwert Null am nächsten kommt,

    c.4) Definition des nach Schritt c.3) bestimmten Wertes $T_i$ als den Wert für $T_{max2}$.

5. Verfahren nach Anspruch 4, **dadurch gekennzeichnet, dass**
die Vielzahl von möglichen Temperaturwerten in Schritt c.1), Werte aus dem Temperaturbereich von 273,15 bis 473,15 K umfasst, wobei der Temperaturabstand von mindestens zehn Werten der Vielzahl von möglichen Temperaturwerten, insbesondere von mindestens einhundert Werten, vorzugsweise von mindestens fünfhundert Werten, kleiner als 1°C, insbesondere kleiner als 0,5 °C, ist.

6. Verfahren nach einem der Ansprüche 3 bis 5, **dadurch gekennzeichnet, dass**
der Wert $\beta$ aus dem Bereich von 750 bis 1050 Wm$^{-2}$, insbesondere 795 bis 1000 Wm$^{-2}$, ausgewählt wird und/oder dass der Wert $\beta$ aus dem Bereich 700 bis 1100 Wm$^{-2}$, so ausgewählt wird, dass er einem vierten Parameter der Sonnenintensität $I_s$ der potentiellen Beschichtungslokalität am nächsten kommt.

7. Verfahren nach einem der Ansprüche 2 bis 6, **dadurch gekennzeichnet, dass**

der Wert $\mu$ aus dem Bereich von 0,85 bis 1,15, insbesondere 0,95 bis 1,05, ausgewählt wird.

8. Verfahren nach einem der vorangehenden Ansprüche, **dadurch gekennzeichnet, dass** der Wert $\alpha_{s1}$ und/oder $T_{max1}$ in Schritt a) durch die Auswahl der Fassadenbeschichtung automatisch vorgegeben wird, wobei Schritt a) die folgenden Unterschritte umfasst:

   a1) Vorgabe einer Fassadenbeschichtung, insbesondere Auswahl einer Fassadenbeschichtung aus einer Liste, vorzugsweise einer digitalen Dropdown-Liste,
   a2) Abgleich der Fassadenbeschichtung mit einer ersten Datenbank, wobei die erste Datenbank Werte für $a_{s1}$ und/oder $T_{max1}$ von Fassadenbeschichtungen umfasst,
   a3) Übertragung der Werte für $\alpha_{s1}$ und/oder $T_{max1}$ aus der ersten Datenbank.

9. Verfahren nach einem der vorangehenden Ansprüche, **dadurch gekennzeichnet, dass** dass der Wert $T_{L1}$ und/oder $h_{w1}$ in Schritt b) durch die Auswahl der Beschichtungslokalität automatisch vorgegeben wird, wobei Schritt b) die folgenden Unterschritte umfasst:

   b1) Vorgabe einer Beschichtungslokalität, insbesondere Auswahl einer Fassadenbeschichtung aus einer digitalen Liste, vorzugsweise einer digitalen Dropdown-Liste,
   b2) Abgleich der Beschichtungslokalität mit der ersten oder zweiten Datenbank, wobei die erste oder zweite Datenbank Werte für $T_{L1}$ und/oder $h_{w1}$ von Beschichtungslokalitäten umfasst,
   $b_3$) Übertragung der Werte für $T_{L1}$ und/oder $h_{w1}$ aus der ersten oder zweiten Datenbank.

10. Verfahren nach einem der vorangehenden Ansprüche, **dadurch gekennzeichnet, dass** eine Gebäudeabbildung mit der Fassadenbeschichtung automatisch computersimuliert und auf dem Display widergegeben wird, wobei die Gebäudeabbildung eine erste Oberfläche und eine zweite und/oder dritte Oberfläche umfasst,
   wobei die erste Oberfläche automatisch mit einer ersten Färbung gefärbt wird, welche einer Färbung der Farbeschichtung im Wesentlichen entspricht,
   wobei die zweite Oberfläche eine fest vorgegebene zweite Färbung aufweist, wobei die dritte Oberfläche automatisch mit einer dritten Färbung gefärbt wird.

11. Verfahren nach Anspruch 10, **dadurch gekennzeichnet, dass** die dritte Färbung im LCh-Farbraum durch die Werte $L_3$, $C_3$, $h_3$ charakterisiert ist und die erste Färbung im LCh-Farbraum durch die Werte $L_1$, $C_1$, $h_1$, wobei $L_3 < L_1$ und $C_1 = C_3 \pm 10$ und/oder $h_1 = h_3 \pm 20°$ gilt.

12. Computerprogrammprodukt, das ein computerlesbares Medium umfasst, auf dem ein Computerprogrammcode gespeichert ist, der konfiguriert ist, die Schritte a) bis c), bevorzugt a) bis d) und besonders bevorzugt a) bis e), des Verfahrens nach einem der Ansprüche 1 bis 11 in einem Computer auszuführen.

13. Verwendung des Computerprogrammprodukts nach Anspruch 12 für die Bestimmung von Fassadenbeschichtungen für eine Beschichtungslokalität.

14. Verwendung des Computerprogrammprodukts nach Anspruch 12 für die Bestimmung der maximalen Oberflächentemperatur einer mit einer Fassadenbeschichtung beschichteten Fassade, insbesondere für die Verringerung der Gefahr oder die Verhinderung einer Fassadenbeschädigung und/oder für die Verringerung der Gefahr oder Verhinderung einer Überhitzung von Innenräumen.

15. Verwendung des Computerprogrammprodukts nach Anspruch 12, in welches die Gleichung
$$\beta \times \alpha_s = \mu \times (h_w \times (T_{max} - T_L) + 5{,}415 \times 10^{-8}(T_{max}^4 - 0{,}9T_L^4))$$ implementiert ist, insbesondere mit den Parametern der Ansprüche 1 bis 7, für die Bestimmung von Fassadenbeschichtungen für eine Beschichtungslokalität und/oder für die Bestimmung der maximalen Oberflächentemperatur einer mit einer Fassadenbeschichtung beschichteten Fassade.

Figur 1

Ceramic 1D - CTINT  ⌄

Farbtonauswahl — 6

CIE Y= 28,37

0,59 — 5

Absorptionskoeffizient [-]

18,0 — 4

Maximaltemperatur des Beschichtung [°C]

Frankfurt,DE  ⌄

Darmstadt,DE
London,GB
Frankfurt,DE
Dubai,AE
Nice,FR
Paris,FR
Istanbul,TR — 14
Goeteborg,SE
ruhen( Wien,AT
Moscow,RU
Tbilisi,GE

Sonnenintensität [W/m²]

863 — 8

Temperatur der Luft [°C]

13 — 9

— 10

# Figur 2

Figur 3

EP 3 570 191 A1

**Europäisches Patentamt**
**European Patent Office**
**Office européen des brevets**

## EUROPÄISCHER RECHERCHENBERICHT

Nummer der Anmeldung

EP 18 17 3314

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Max J Setzer ET AL: "Formelsammlung Bauphysik - Wärme - Feuchte", , 30. September 2004 (2004-09-30), Seiten 1-53, XP055519541, Wiesbaden Gefunden im Internet: URL:https://www.uni-due.de/ibpm/Aufgabensammlung/Waerme-Feuchte_2004_2005.pdf [gefunden am 2018-10-26] * Seite 4, Absatz 3 - Seite 4, Absatz 1 * * Seite 8, Absatz 2 - Seite 11, Absatz 4 * ----- | 1-15 | INV. G06F17/50 |
| A | US 4 279 244 A (MCALISTER ROY E) 21. Juli 1981 (1981-07-21) * Zusammenfassung * * Spalte 24, Zeile 67 - Spalte 27, Zeile 2 * ----- | 1-15 | |
| A | WO 2017/134589 A1 (ECOLE POLYTECHNIQUE FED DE LAUSANNE [CH]) 10. August 2017 (2017-08-10) * Zusammenfassung * * Seite 1, Absatz 3 - Seite 2, Absatz 2 * * Seite 6, Absatz 2 * * Seite 6, letzter Absatz - Seite 7, Absatz 1 * * Seite 10, Absatz 3 * ----- | 1-15 | **RECHERCHIERTE SACHGEBIETE (IPC)** F24S G06F |

Der vorliegende Recherchenbericht wurde für alle Patentansprüche erstellt

| Recherchenort | Abschlußdatum der Recherche | Prüfer |
|---|---|---|
| München | 30. Oktober 2018 | Sohrt, Wolfgang |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 17 3314

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2018

| Im Recherchenbericht angeführtes Patentdokument | Datum der Veröffentlichung | Mitglied(er) der Patentfamilie | Datum der Veröffentlichung |
|---|---|---|---|
| US 4279244 A | 21-07-1981 | KEINE | |
| WO 2017134589 A1 | 10-08-2017 | KEINE | |

Für nähere Einzelheiten zu diesem Anhang : siehe Amtsblatt des Europäischen Patentamts, Nr.12/82

EPO FORM P0461